(19) Europäisches Patentamt / European Patent Office / Office européen des brevets

(11) **EP 2 850 739 B1**

(12) **EUROPÄISCHE PATENTSCHRIFT**

(45) Veröffentlichungstag und Bekanntmachung des Hinweises auf die Patenterteilung:
**07.09.2016 Patentblatt 2016/36**

(51) Int Cl.:
***H04B 1/7163*** *(2011.01)*

(21) Anmeldenummer: **13733971.9**

(22) Anmeldetag: **20.06.2013**

(86) Internationale Anmeldenummer:
**PCT/EP2013/062827**

(87) Internationale Veröffentlichungsnummer:
**WO 2014/012734 (23.01.2014 Gazette 2014/04)**

(54) **VERFAHREN FÜR DIE FUNKÜBERTRAGUNG MITTELS ULTRABREITBAND-ÜBERTRAGUNG**

METHOD FOR RADIO TRANSMISSION BY ULTRA-WIDEBAND-TRANSMISSION

PROCÉDÉ DE TRANSMISSION RADIO PAR TRANSMISSION ULTRA-LARGE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2012 DE 102012212689**

(43) Veröffentlichungstag der Anmeldung:
**25.03.2015 Patentblatt 2015/13**

(73) Patentinhaber: **Siemens Aktiengesellschaft
80333 München (DE)**

(72) Erfinder:
• **GLÄNZER, Ulrike**
  **85579 Neubiberg (DE)**
• **HÜTTNER, Jörg**
  **95028 Hof (DE)**

(56) Entgegenhaltungen:
**US-A1- 2005 175 068     US-A1- 2005 254 553
US-A1- 2007 081 578**

**Beschreibung**

Die Erfindung betrifft ein Verfahren für die Funkübertragung von Nachrichtensymbolen, die als breitbandiges Sendesignal durch einen UWB-Sender ausgesendet werden. UWB steht für die an sich bekannte Ultrabreitband-Übertragung (UWB - ultra wide band), wie sie beispielsweise in einer Form auch als der Standard IEEE 802.15.4a definiert ist. Das breitbandige Sendesignal wird demnach mittels einer Pulsphasenmodulation (Englisch: PPM - pulse-position modulation) erzeugt und weist daher ein Linienspektrum mit einer Vielzahl von modulierten Frequenzlinien auf. Die Pulsphasenmodulation wird entsprechend ihrer englischen Bezeichnung auch als Pulspositionsmodulation bezeichnet. Zu der Erfindung gehören auch ein System zur Funkübertragung mittels Ultrabreitbandübertragung und ein Empfänger für das System.

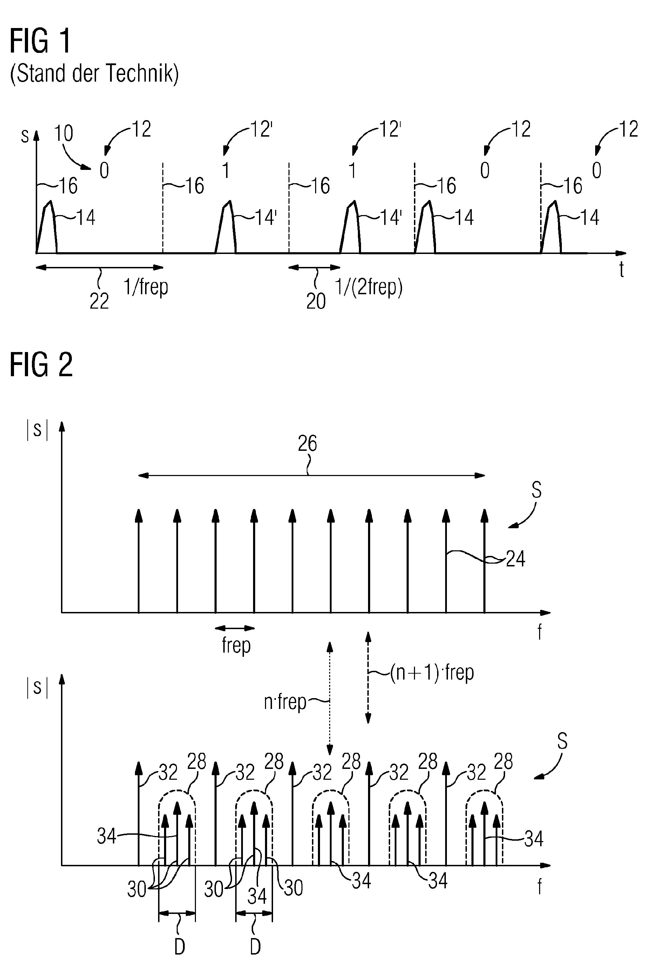

Die Pulsphasenmodulation ist im Folgenden anhand von FIG 1 näher erläutert. Gezeigt ist ein Diagramm, bei dem über der Zeit t ein Steuersignal s eines UWB-Senders aufgetragen ist, durch welches z.B. ein Oszillator für die Erzeugung eines elektromagnetischen Funksignals gesteuert werden kann. Bei der Pulsphasenmodulation kann durch den UWB-Sender eine Folge 10 von Nachrichtensymbolen 12, 12' als Folge von Impulsen oder Pulsen 14, 14' repräsentiert sein, die innerhalb eines vorgegebenen Senderasters oder Zeitrasters 16 zeitlich verschoben ausgesendet werden. Eine zeitliche Verschiebung 20 jedes Pulses 14, 14' ist dabei von dem jeweiligen Nachrichtensymbol 12 abhängig, das durch den Puls 14, 14' repräsentiert wird. Wird beispielsweise ein binäres Signal übertragen, so kann das sog. Alphabet der möglichen Nachrichtensymbole des Senders aus den Nachrichtensymbolen "0" (in FIG 1 mit dem Bezugszeichen 12 versehen) und "1" (Bezugszeichen 12') bestehen. Um eine Folge aus Nullen und Einsen zu übertragen, kann dann jeweils für das Nachrichtensymbol "0" ein Puls 14 zu einem Zeitpunkt ausgesendet werden, der mit dem Zeitraster 16 zusammenfällt. Das Nachrichtensymbol "1" kann dann im Unterschied dazu jeweils durch einen Puls 14' repräsentiert sein, der um eine halbe Rasterdauer 22 verschoben ausgesendet wird, wie in FIG 1 durch die Verschiebung 20 veranschaulicht ist. Durch das Zeitraster 16 ist eine Trägerfrequenz oder Rasterfrequenz frep definiert, deren Kehrwert 1/freq der Rasterdauer 22 entspricht, mit der zwei aufeinanderfolgende Pulse 14, 14' eines gleichen Nachrichtensymbols 12, 12' ausgesendet werden, wenn keine zusätzlichen Kodiermaßnahmen, wie z. B. ein Scrambling, verwendet werden. Die zeitliche Verschiebung 20 für das Nachrichtensymbol "1" kann dann eben 1/(2frep) entsprechen. Das Zeitsignal eines einzelnen Pulses kann jeweils z. B. ein Recheckimpuls mit vorbestimmter Breite oder (wie im Beispiel von FIG 1) auch ein anders geformter Puls 14, 14' sein. Das eigentliche elektromagnetische Sendesignal kann noch durch eine Modulation in einen hochfrequenten Frequenzbereich, z.B. zwischen 1 und 10 GHz, verschoben werden, was aber für die Erläuterung der Erfindung nicht relevant ist.

Die beschriebene pulsbasierte Übertragung zielt auf Anwendungen ab, bei denen energiesparende und kostengünstige Lösungen gefordert sind. Beispielsweise ist es mit dieser Übertragung möglich, drahtlose Sensoren mit nur einem geringen Energieaufwand betreiben zu können. Die Verwendung von verhältnismäßig schmalen und damit breitbandigen Pulsen ermöglicht zudem eine robustere Datenübertragung, da Auslöschungseffekte durch Mehrwegeausbreitung (fading) einen deutlich geringeren Einfluss haben als bei schmalbandigen Übertragungstechniken.

Ein Nachteil der pulsbasierten UWB-Kommunikation ist allerdings, dass empfängerseitig eine verhältnismäßig komplexe Empfangsschaltung nötig ist. Es ist ein Korrelationsempfänger für die einzelnen Pulssignale nötig, mittels welchem die einzelnen Pulse identifiziert und ihre Lage im Zeitraster erkannt werden kann. Dieser ist schaltungstechnisch sehr aufwändig.

Aus der US 2005/0254553 A1 ist ein Verfahren zur orthogonalen Pulspolarität-Modulation für Ultrabreitbandsysteme beschrieben.

Aus der US 2005/0175068 A1 ist ein Verfahren zum Eliminieren von Spektrallinien und das Bilden eines Leistungsdichtespektrums eines Ultrabreitband-Übertragungssignals bekannt.

Eine Aufgabe der vorliegenden Erfindung ist es, eine schaltungstechnisch einfach zu realisierende UWB-Kommunikationseinrichtung bereitzustellen.

Die Aufgabe wird durch ein Verfahren gemäß Patentanspruch 1, ein System gemäß Patentanspruch 10 und einen Empfänger gemäß Patentanspruch 11 gelöst. Vorteilhafte Weiterbildungen der Erfindung sind durch die Unteransprüche gegeben.

Das erfindungsgemäße Verfahren beruht demnach auf der Funkübertragung von Nachrichtensymbolen mit einem UWB-Sender, welcher aus Nachrichtensymbolen mittels einer Pulsphasenmodulation in der eingangs beschriebenen Weise ein breitbandiges Sendesignal erzeugt. Ein für die Erfindung wichtiger Aspekt ist hierbei, dass ein solches Sendesignal ein Linienspektrum mit einer Vielzahl von Frequenzlinien aufweist, denn eine Folge periodisch mit der Rasterfrequenz ausgesendeter Pulse weist ein Linienspektrum auf. Wegen der möglichen zeitlichen Verschiebungen einzelner Pulse im Zeitraster, z. B. um die halbe Rasterdauer, ergibt sich zwar kein perfekt periodisches Signal. Eine wichtige, der Erfindung zugrunde liegende Erkenntnis ist hier, dass auch das Spektrum des breitbandigen Sendesignals einer Pulsphasenmodulation weiterhin ein Linienspektrum aufweist. Durch die zeitliche Verschiebung werden hierbei im Vergleich zu einem Spektrum einer äquidistanten Pulsfolge lediglich einige der Frequenzlinien durch die Pulsphasenmodulation verändert. Jede durch die Pulsphasenmodulation im Vergleich zum unmodulierten Linienspektrum veränderte Frequenzlinie ist hier als modulierte Frequenzlinie bezeichnet. Je nach Typ der verwendeten Pulsphasenmodulation werden diese Frequenzlinien verbreitert oder in eine Gruppe aus mehreren kleinen Frequenzlinien aufgeteilt.

Aus dem Sendesignal wird gemäß dem erfindungsgemäßen Verfahren durch den Empfänger nicht wieder das Zeitsignal der Pulsfolge rekonstruiert, um die gesendeten Nachrichtensymbole zu ermitteln. Denn dies würde bedeuten, das Sendesignal in seiner kompletten Bandbreite zu verarbeiten. Stattdessen wird das Sendesignal durch einen Empfänger empfangen, welcher nur ein schmalbandiges Signal aus einer der modulierten Frequenzlinien gewinnt. Das schmalbandige Signal umfasst insgesamt eine Bandbreite, die weniger als dem Doppelten der Rasterfrequenz des Zeitrasters entspricht, das der Pulsphasenmodulation des UWB-Senders zugrunde liegt. Diese Bandbreite wird hier als schmalbandig bezeichnet. Die spektrale Breite des schmalbandigen Signals ist bedeutend geringer als die gesamte Bandbreite des Sendesignals, die mehr als das zehnfache der Rasterfrequenz betragen kann. Entsprechend wird hier unter breitbandig ein spektraler Bereich verstanden, der zumindest dem Fünffachen der Rasterfrequenz entspricht.

Für die Rekonstruktion der gesendeten Folge von Nachrichtensymbolen wird aus dem schmalbandigen Signal durch den Empfänger zu vorbestimmten Zeitpunkten eine Phase des schmalbandigen Signals ermittelt. Die jeweils ermittelte Phase wird dann einem aus den mehreren vorbestimmten Nachrichtensymbolen des Alphabets des Senders zugeordnet.

Die Erfindung weist den Vorteil auf, dass nur ein Empfänger bereitgestellt werden muss, der ein schmalbandiges Signal verarbeiten kann. Ein solcher Empfänger ist schaltungstechnisch bedeutend einfacher zu realisieren als ein Empfänger, der das gesamte breitbandige Sendesignal verarbeiten kann. Insbesondere kann ein für die Durchführung des erfindungsgemäßen Verfahrens geeigneter Empfänger aus einem Empfänger für ein PSK-Signal (PSK - phase shift keying) gegebenenfalls durch geringfügige schaltungstechnische Veränderungen gebildet werden. Bevorzugt wird ein PSK-Empfänger verwendet. In diesem Zusammenhang ist von der Erfindung auch die Verwendung eines schmalbandigen PSK-Empfängers für die Gewinnung der Nachrichtensymbole aus dem breitbandigen UWB-Sendesignal umfasst.

Der Erfindung liegt hier die folgende Erkenntnis zugrunde: Wenn in der Pulsfolge des Sendesignals einzelne Pulse mit veränderlichem Zeitversatz ausgesendet werden, entsteht ein Linienspektrum mit Frequenzlinien, die sich in regelmäßigen spektralen Abständen im Linienspektrum wiederholen. Nur einige der Frequenzlinien sind dabei durch die Pulsmodulation im Vergleich zu einem unmodulierten Signal verändert. Die spektrale Bandbreite eines für den Empfang signifikanten Anteils einer solchen modulierten Frequenzlinie kann bis zu 2 Mal freq betragen, wobei freq die erwähnte Rasterfrequenz angibt. Es hat sich herausgestellt, dass es für die zuverlässige Erkennung der Nachrichtensymbole ausreicht, eine einzelne solche modulierte Frequenzlinie zu beobachten. Das schmalbandige Zeitsignal einer solchen modulierten Frequenzlinie ist ein zumindest abschnittsweise sinusförmiges Signal, das an vorbestimmten Stellen Phasensprünge aufweist. Das schmalbandige Signal kann z.B. mittels eines Bandpassfilters aus dem Sendesignal isoliert werden.

Bevorzugt wird das schmalbandige Signal zunächst durch den Empfänger zum Ermitteln der Phase in ein Basisband demoduliert. Nach einer Abwärtsmodulation des Sendesignals kann auch ein Tiefpassfilter zur Isolierung des schmalbandigen Signals genutzt werden. Außerdem ist eine digitale Verarbeitung des schmalbandigen Signals möglich.

Wo sich eine geeignete modulierte Frequenzlinie im Spektrum des Sendesignal befindet, kann aus der bekannten Rasterfrequenz und dem bekannten Modulationsverfahren hergeleitet werden. Gemäß einer Ausführungsform des Verfahrens wird das schmalbandige Signal einer modulierten Frequenzlinie ausgewertet, deren Mittenfrequenz ein ungeradzahliges Vielfaches der Rasterfrequenz des Senderasters beträgt. Dann können Nachrichtensymbole eines binären Alphabets erkannt werden, die durch eine Verschiebung um eine halbe Rasterdauer voneinander unterschieden werden.

Zur Übertragung eines einzelnen Nachrichtensymbols können durch den UWB-Sender jeweils auch mehrere aufeinanderfolgende Pulse erzeugt werden, welche dieselbe Zeitverschiebung im Zeitraster der Pulsphasenmodulation aufweisen (mehrfaches Senden). Das sich ergebende Sendersignal kann weiterhin durch den Empfänger korrekt ausgewertet werden. Hinzu kommt der Vorteil, dass die Erkennung der Nachrichtensymbole wegen der Redundanz robuster ist und zugleich die spektrale Breite der modulierten Frequenzlinien kleiner ist als bei einem Sendesignal mit nur einem Puls pro Nachrichtensymbol.

Falls die Bandbreite des schmalbandigen Signals nicht kritisch ist, kann durch den UWB-Sender auch ein einzelnes Nachrichtensymbol als eine vorbestimmte Folge von Pulsen kodiert ausgesendet werden. Auch hierdurch kann eine gegenüber Störsignalen robustere Übertragung erreicht werden. Das erfindungsgemäße Verfahren ist hier in vorteilhafter Weise auch mit einem solchen Scrambling der Pulse kompatibel.

Ein weiterer Vorteil ergibt sich, wenn durch den Empfänger auch ein Referenzsignal aus dem Sendesignal gewonnen wird. Die Phase des Referenzsignals kann als Referenzphase nötig sein, um anhand des schmalbandigen Signals nicht nur die einzelnen Pulse zu erkennen, sondern auch deren absolute zeitliche Lage im Zeitraster des Senders. Das Referenzsignal wird bevorzugt aus einem sinusförmigen Signal einer weiteren (unmodulierten) Frequenzlinie des Linienspektrums gewonnen. Diese Ausführungsform des Verfahrens nutzt die Erkenntnis, dass nicht alle Frequenzlinien durch die Pulsphasenmodulation beeinflusst werden. Einige Frequenzlinien bleiben unverändert, egal welche Folge von Nachrichtensymbolen gesendet wird. Aus diesen Frequenzlinien kann deshalb das Referenzsignal zum Bereitstellen der Referenzphase gewonnen werden. Bei der oben beschriebenen Übertragungsvariante mit binärem Alphabet und einer Verschiebung von einer halben Rasterdauer beträt die Frequenz der weiteren Frequenzlinie bevorzugt ein geradzahliges Vielfaches der durch das Zeitraster der Pulsphasenmodulation des UWB-Senders festgelegten Rasterfrequenz. Für andere Sendemodi kann z.B. eine spektrale Analyse des Sendesignals zum Auffinden geeigneter Frequenzlinien genutzt werden.

In diesem Zusammenhang gehört zu der Erfindung auch ein Empfänger, welcher zum Empfangen eines Sendesignals und zum Rekonstruieren von Nachrichtensymbolen aus dem empfangenen Sendesignal ausgebildet ist. Der Empfänger ist des Weiteren dazu ausgebildet, aus dem empfangenen Sendesignal ein schmalbandiges Sendesignal zu gewinnen, dass einer modulierte Frequenzlinie eines Linienspektrums des Sendesignals entspricht und dessen Bandbreite weniger als dem Doppelten der Rasterfrequenz entspricht. Des Weiteren ist der Empfänger dazu ausgelegt, zu vorbestimmten Zeitpunkten jeweils eine Phase des schmalbandigen Signals zu ermitteln und aus einem sinusförmigen Signal einer weiteren (unmodulierten) Frequenzlinie des Linienspektrums eine Referenzphase zu bilden. Der Empfänger weist des weiteren Mittel auf, um die ermittelte Phase mit der Referenzphase zu vergleichen und hierdurch einen Wert für eine Phasenverschiebung des schmalbandigen Signals bezüglich des sinusförmigen Signals zu ermitteln und diesen ermittelten Wert einem von mehreren vorbestimmten Nachrichtensymbolen zuzuordnen. Bei der schaltungstechnischen bzw. digitalen Umsetzung des Empfängers kann auf an sich aus dem Stand der Technik bekannte Varianten zurückgegriffen werden. Für die Gewinnung des Referenzsignals und dessen Referenzphase kann z. B. ein Verfahren zur Gewinnung eines Trägersignals als Bezugssignal für eine Demodulation eines modulierten Trägers genutzt werden. Die Gewinnung des schmalbandigen Signals, die Ermittlung von dessen Phase und die Zuordnung des Phasendifferenzwerts zu einem Nachrichtensymbol kann nach dem Prinzip der PSK-Demodulation durchgeführt werden.

Für das erfindungsgemäße Verfahren kommen prinzipiell zur Gewinnung des schmalbandigen Signals mehrere der modulierten Frequenzlinien im Linienspektrums in Frage. Um dies in vorteilhafter Weise zu nutzen, wird gemäß einer Ausführungsform des Verfahrens durch den Empfänger zunächst eine Mehrzahl von modulierten Frequenzlinien des Linienspektrums bezüglich einer Signalqualität, insbesondere eines Signal-zu-Rausch-Verhältnisses und/oder einer Signalleistung, überprüft. Als die zu verwendende modulierte Frequenzlinie wird dann aus dieser Mehrzahl eine modulierte Frequenzlinie ausgewählt, bei welcher die Signalqualität einen vorbestimmten Schwellenwert übersteigt. So kann flexibel auf Störer reagiert werden. Genauso kann auch bei der Bestimmung einer geeigneten unmodulierten Frequenzlinie für die Gewinnung des sinusförmigen Referenzsignals vorgegangen werden.

Es können in vorteilhafter Weise auch mehrere modulierte Frequenzlinien für eine parallele, gleichzeitige Auswertung des Sendersignals genutzt werden. Hierzu wird gemäß einer Ausführungsform des Verfahrens eine Phase eines schmalbandigen Signals zumindest einer weiteren modulierten Frequenzlinie des Linienspektrums in der genannten Weise ausgewertet und hieraus jeweils ein weiteres Nachrichtensymbol rekonstruiert. Aus allen rekonstruierten Nachrichtensymbolen wird dann eines als das gesendete Nachrichtensymbol festgelegt. Werden beispielsweise drei oder mehr Frequenzlinien ausgewertet, kann ein Mehrheitsentscheid über das richtige Nachrichtensymbol entscheiden.

Wie bereits ausgeführt, gehört zu der Erfindung auch ein System zur Funkübertragung von Nachrichtensymbolen, bei welchem ein UWB-Sender zum Erzeugen eines breitbandigen Sendesignals aus den Nachrichtensymbolen mittels einer Pulspositionsmodulation oder Pulsphasenmodulation bereitgestellt ist. Zum Empfangen des Sendesignals und zum Rekonstruieren der Nachrichtensymbole aus dem empfangenen Sendesignal ist ein Empfänger bereitgestellt, welcher dazu ausgebildet ist, aus einer modulierten Frequenzlinie eines Linienspektrums des breitbandigen Sendesignals ein schmalbandiges Signal zu ermitteln, dessen Bandbreite weniger als dem Doppelten einer Rasterfrequenz eines Zeitrasters der Pulsphasenmodulation entspricht, und zu vorbestimmten Zeitpunkten jeweils eine Phase des schmalbandigen Signals zu ermitteln und gemäß einer vorbestimmten Zuordnungsregel einem aus mehreren vorbestimmten Nachrichtensymbolen zuzuordnen. Die Zeitpunkte ergeben sich dabei aus dem Zeitraster des Senders. Das System ermöglicht die Durchführung des erfindungsgemäßen Verfahrens. Für die Realisierung des Empfängers des Systems kann prinzipiell auf die Bauweise eines Empfängers für ein PSK-Signal zurückgegriffen werden.

Zu der Erfindung gehören auch Weiterbildungen des weiter oben beschriebenen erfindungsgemäßen Empfängers und des erfindungsgemäßen Systems, die Merkmale aufweisen, die bereits im Zusammenhang mit den Weiterbildungen des erfindungsgemäßen Verfahrens beschreiben wurden. Aus diesem Grunde sind die entsprechenden Weiterbildungen des Empfängers und des Systems hier nicht noch einmal beschrieben.

Im Folgenden ist die Erfindung noch einmal genauer anhand von konkreten Ausführungsbeispielen erläutert. Dazu zeigt:

FIG 1   ein Diagramm mit einer Pulsfolge für die Steuerung eines Oszillators eines UWB-Senders,

FIG 2   zwei Diagramme mit Linienspektren eines Sendersignals des UWB-Senders,

FIG 3   drei Phasendiagramme zur Erläuterung der Linienspektren von FIG 2,

FIG 4    ein Blockschaltbild, das die prinzipiellen Bauweise eines Senders einer bevorzugten Ausführungsform des erfindungsgemäßen Systems veranschaulicht, und

FIG 5    ein Blockschaltbild, das die prinzipielle Bauweise einer bevorzugten Ausführungsform des erfindungsgemäßen Empfängers veranschaulicht.

Bei den im Folgenden erläuterten Beispielen stellen die beschriebenen Komponenten des Systems jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In FIG 2 ist im oberen Diagramm über der Frequenz f ein Betrag |S| eines Linienspektrums S eines Sendersignals eines UWB-Senders aufgetragen, wie es sich ergibt, wenn der UWB-Sender Pulse mit einem jeweiligen Zeitsignal oder Pulssignal p(t) in einem Zeitraster mit einer Rasterdauer 1/frep aussendet. Mit anderen Worten werden die Pulse in gleichen zeitlichen Abständen von 1/frep ausgesendet, also mit einer Wiederholrate frep. Die Pulse sind also äquidistant. Das Linienspektrum S weist eine Vielzahl von Frequenzlinien 24 auf, von denen in FIG 2 der Übersichtlichkeit halber nur einige mit einem Bezugszeichen versehen sind. Eine gesamte Bandbreite 26 des Linienspektrums S kann beispielsweise 1 GHz betragen.

Das Linienspektrum S ist das Spektrum des Zeitsignals s(t) der Pulsfolge. Das Zeitsignal kann beschrieben werden als:

$$s(t) = p(t) * \sum_k d(t - k / frep) = \sum_k p(t - k / frep),$$

wobei d() für den Dirac-Impuls, n für die Zahl Pi und das Symbol * für den Faltungsoperator stehen. Der Summenindex k kann theoretisch allen natürlichen Zahlen umfassen. s(t) beschreibt das ausgesendeten Signal. Es resultiert aus der Faltung eines einzigen Pulssignals p(t) mit einem Impulskamm mit der Periodizität freq. Betrachtet man das Signal im Frequenzbereich, so entsteht das Linienspektrum S, dessen Linien sich im Abstand frep zueinander befinden. Die Form und Positionsspektrums wird hingegen von der spektralen Form P(w) und der Frequenz des Pulssignals p(t) bestimmt.

$$S(w) = P(w) \sum_l d(w - 2 \pi l\, frep),$$

 wobei w = 2 n f die Kreisfrequenz ist. Der Summenindex l kann theoretisch alle ganzen Zahlen umfassen.

Aus der Sicht eines schmalbandigen Empfängers sind das somit schmalbandige, sinusförmige Signalanteile bei verschiedenen Trägerfrequenzen:

$$s(t) = \sum_l P(2 \pi l\, frep) \exp(j\, 2 \pi l\, frep\, t),$$

wobei exp() die Exponentialfunktion und j die imaginäre Einheit mit $j^2 = -1$ ist.

Für den Fall eines PPM-modulierten Signals, stellt man für das Spektrum S fest, dass sich die Phasenlage einiger der sinusförmig in Trägersignale ebenfalls verändern muss, denn die Phasenlage des HF-Trägers besteht immer in einem ganzzahligen vielfachen Bezug zur Phase der Wiederholfrequenz. Ändert man die Position der Pulssequenz, so ändert sich auch die Phasenlage der sinusförmigen Trägerfrequenzen.

Im unteren Diagramm von FIG 2 ist zur Veranschaulichung das Linienspektrum S gezeigt, wie es sich ergeben kann, wenn der UWB-Sender die Pulse zur Übertragung einer Folge von unterschiedlichen Nachrichtensymbolen mittels einer Pulsphasenmodulation bezüglich des Zeitrasters verschiebt. Im Vorliegenden Beispiel liegt ein binäres Alphabet (Nachrichtensymbole "0" und "1") und eine Verschiebung um eine halbe Rasterdauer für eines der Nachrichtensymbole zugrunde.

Das Spektrum S weist mehrere modulierte Frequenzlinien 28 auf, von denen der Übersichtlichkeit halber wieder nur einige mit einem Bezugszeichen versehen sind. Jede modulierte Frequenzlinie 28 besteht bei dem hier verwendeten Pulsphasenmodulationsverfahren aus einzelnen Frequenzlinien 30 mit verringerter Amplitude, d.h. einzelne Frequenzlinien 24 wurden hier durch die Pulsphasenmodulation jeweils in ein Gruppe von Frequenzlinien 30 aufgeteilt. Bei der modulierten Frequenzlinie 28 kann es sich aber auch um eine verbreiterte Frequenzlinie 24 handeln, die spektral "verschmiert" wurde. Andere Frequenzlinien 32 des Spektrums S sind durch die Pulsphasenmodulation dagegen nicht verändert. Die unveränderten Frequenzlinien 32 weisen Frequenzen auf, die einem geradzahligen Vielfachen einer Rasterfrequenz freq des Zeitrasters der Pulsphasenmodulation entspricht. Mittenfrequenzen 34 der modulierten Frequenzlinien 28 entsprechen einem ungeradzahligen Vielfachen der Rasterfrequenz freq. Eine Bandbreite D jeder Gruppe aus kleineren Frequenzlinien 30 einer modulierten Frequenzlinie 28 ist kleiner als das Doppelte der Rasterfrequenz frep. In FIG 2 sind all diese Zusammenhänge verdeutlicht, indem ein Faktor n angegeben ist, welcher einer ungeraden Zahl entspricht.

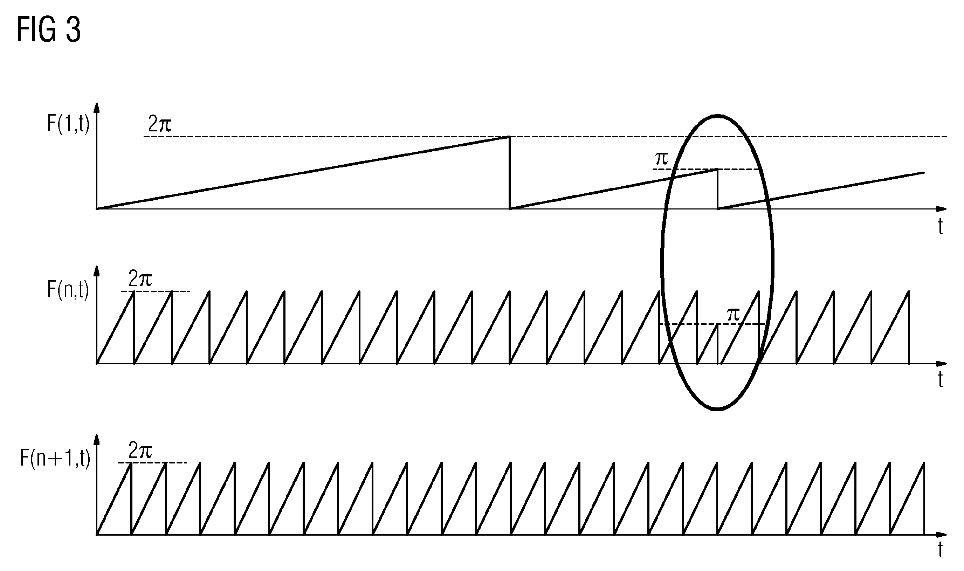

FIG 3 veranschaulicht die Entstehung der modulierten Frequenzlinien 28. Im oberen Diagramm ist die Phasenlage F(1,t) des sinusförmige Signalanteils mit der Grundwiederholfrequenz frep eines einzelnen, bezüglich des Zeitrasters verschobenen Pulssignals p(t) über der Zeit t dargestellt. Die Phase F(n,t) der schmalbandigen, sinusförmigen Signalanteile mit ungeradzahlig vielfacher Trägerfrequenz n Mal frep ist moduliert, wohingegen die Träger bei geradzahligem Vielfachen (n+1) der Pulswiederholfrequenz freq unmoduliert erhalten bleiben, d.h. die Phase F(n+1,1) ist durch die Pulsverschiebung nicht beeinflusst. Der zeitliche Verlauf der Phase F(n+1,t) kann somit als Referenzphase verwendet werden. Ein Vergleich z.B. der Verläufe der Phase F(n,t) mit demjenigen der Phase F(n+1,t) zeigt dann an, wann ein Puls gesendet wurde, der bezüglich des Zeitrasters des Senders einen Versatz aufweist.

Eine PPM kann somit in eine PSK-Modulation für ungeradzahlige Vielfachen Träger der Pulswiederholfrequenz frep überführt werden. Somit kann prinzipiell ein ausgesendetes UWB-Pulssignal mit einer Empfängerarchitektur empfangen werden, die derjenigen für einen PSK-Empfänger entspricht.

Für eine Datenübertragung wird zwischen den beiden PPM-Positionen umgeschaltet. Das Umschalten muss so erfolgen, dass die Empfängerbandbreite nicht übertroffen wird. Dies kann zur Folge haben, dass mehrere "verschobene" Pulse hintereinander ausgesendet werden müssen, um ein Symbol darzustellen. Mit dieser Methode wird zum einen die Modulationsbandbreite reduziert, zum anderen ein Prozessierungsgewinn auf der Empfängerseite erhöht.

Um der Datenübertragung weitere Robustheit zu verleihen, können die Symbole auch eine Codierung enthalten.

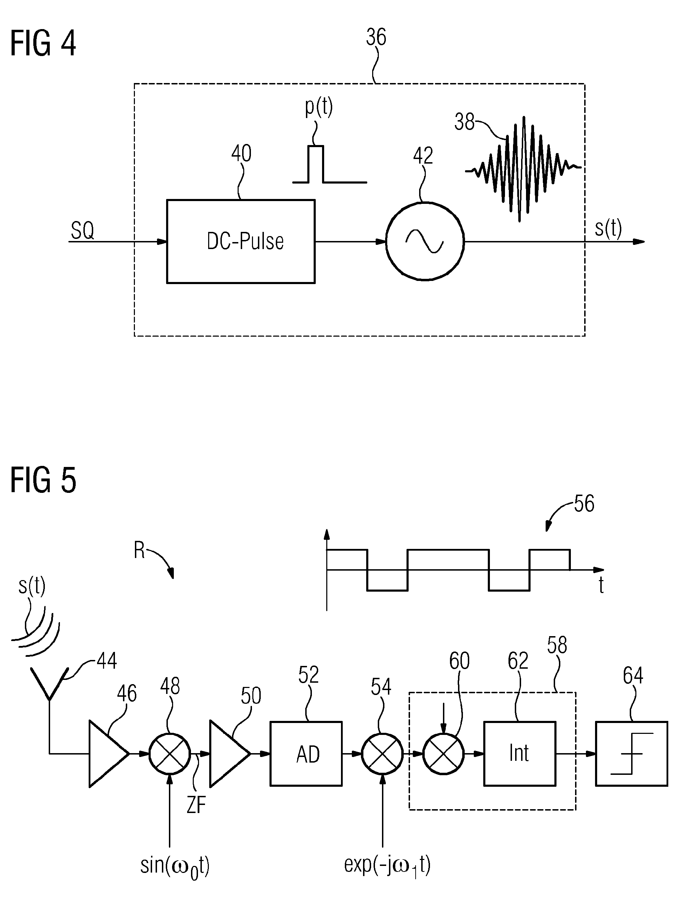

Eine mögliche Implementierung des Senders ist in FIG 4 gezeigt. Sie besteht prinzipiell aus zwei Blöcken. Zunächst wird die entsprechende Sendefrequenz generiert, dies erfolgt digital und kann zum Beispiel in einem FPGA (field programmable gate array) oder CPLD (complex programmable logic device) ausgeführt sein. Diese Sequenz SQ steuert dann den Impulsgenerator 36 an. Für die Generierung von kohärenten HF-Pulsen 38 gibt des verschiedene Methoden. Die dargestellte bezieht sich auf die Verwendung eines DC-Generators 40 (DC - Gleichspannungssignal), der einen HF-Oszillator 42 ansteuert. Der HF-Oszillator schwingt bei Empfangen eines Pulses p(t) stets mit derselben Phase an (kohärentes Anschwingen). Diese Architektur kommt mit wenigen Bauelementen aus und erlaubt eine einstellbare Position des HF-Pulses 38. Durch das kohärente Anschwingen wird vermieden, dass die modulierten Frequenzlinien 28 durch Phasenunterschiede in den Trägersignalen der einzelnen Pulse verzerrt werden. Auch eine ungewollte Modulation der weiteren Frequenzlinien 32 ist vermieden.

Eine mögliche Architektur eines Empfängers R ist in FIG 5 gezeigt. Nach einer Eingangsverstärkung des über eine Antenne 44 empfangenen Sendsignals s(t) durch einen Verstärker 46 erfolgt ein Heruntermischen mittels eines Mischers 48 in ein Zwischenfrequenzband ZF. Anschließend wird das heruntergemischte Signal mittels einer weiteren analogen Schaltung 50 gefiltert und verstärkt, mittels eines Analog-Digital-Wandlers 52 digitalisiert und digital mittels eines digitalen Mischers 54 in ein Basisband BB heruntergemischt. Für die Realisierung des in FIG 5 gezeigten Empfängers kann beispielhaft eine DDS-PLL-Architektur (DDS - direct digital synthesis; PLL - phase locked loop) für die Erzeugung der Mischerkreisfrequenzen w0 und w1 zugrundegelegt sein. Prinzipiell sind aber beliebige andere Varianten möglich, welche die benötigte Trägerfrequenz erzeugen. Besondere Vorteile ergeben sich zudem, wenn die geradzahligen vielfachen Frequenzlinien 32 miterfasst und ausgewertet werden. Dadurch kann ein kohärenter Empfang des Signals realisiert werden.

Um den Empfang des PSK-Signals robuster zu gestalten, gibt es verschiedene Möglichkeiten. Zum einen kann die Anzahl der verschobenen Pulse pro Nachrichtensymbol vergrößert werden. Zum anderen kann für die Datenübertragung eine Codierung z. B. durch Verwendung einer Mustersequenz 56 für jeden Puls verwendet werden, die je nach Länge einen zusätzlichen Prozessionsgewinn bietet. Die Mustersequenz 56 kann dann digital mittels eines Korrelators 58 bestehend aus einem Multiplizierer 60 und einem Integrator 62 mit dem Basisbandsignal verglichen werden. Ein Entscheider 64 zeigt dann an, zu welchem Zeitpunkt eine vollständige Mustersequenz 56 erkannt wurde. Ein Vergleich mit dem Zeitraster ermöglicht es dann, den der Mustersequenz 56 zugrundeliegenden Puls einem der Nachrichtensymbole ("0" oder "1") zuzuordnen.

Anstelle des Korrelators 58 kann auch eine andere Signalauswertung stattfinden, welche z.B. direkt den Phasenverlauf F(n,t) rekonstruiert. Hierfür bietet der Stand der Technik eine Vielzahl von Lösungen, z. B. die PSK-Demodulation.

Die Auswertung kann auch bei mehreren Frequenzen durchgeführt werden und somit die Robustheit des Systems zusätzlich erhöht werden. Eine weitere Möglichkeit, welche die gleichzeitige Übertragung der Frequenzlinien bietet, ist es, die bestmöglich geeigneten Frequenzlinien aus dem übertragenen Signal auszuwählen. Somit können schmalbandige Störer ausgeschlossen werden oder Auslöschungseffekte umgangen werden.

Die Erfindung hat den Vorteil, dass sendeseitig die Vorteile eines UWB-Pulssystems und empfangsseitig die Vorteile eines PSK-Empfängers miteinander verbunden werden. Der Sender braucht lediglich aus einem kohärent anschwingenden Pulsoszillator bestehen, der mit einer geeigneten Pulsfolge eingestreut wird, die mittels der PPM erzeugt wird. Somit wird keine aufwändige Generierung eines HF-Signals benötigt. Der Empfänger hingegen benötigt keinen Korrelationsempfänger für das Pulssignal, sondern kommt mit einer PSK-Empfängerarchitektur aus. Zudem bietet das erfindungsgemäße Verfahren den Vorteil, dass jede geradzahlig wiederholte Frequenzlinie 32 die Trägerinformation liefert und somit keine aufwändige Trägerrückgewinnung für einen kohärenten Empfang notwendig ist.

**Patentansprüche**

1. Verfahren zur Funkübertragung von Nachrichtensymbolen (12, 12'), bei welcher durch einen UWB-Sender (36) ein pulsphasenmoduliertes Sendesignal (s) ausgesendet wird, das getrennte Pulse (14, 14') umfasst, von denen jeder bezüglich eines Zeitrasters (16) einen zeitlichen Versatz (20) aufweist, der von einem Nachrichtensymbol (12, 12') abhängt, das der Puls (14, 14') repräsentiert, und insgesamt das Sendesignal (s) ein Linienspektrum (S) mit einer Vielzahl von Frequenzlinien (30, 32) aufweist, wobei bei dem Verfahren das Sendesignal (s) durch einen Empfänger (R) empfangen wird,
   **dadurch gekennzeichnet, dass**
   durch den Empfänger (R):

   - ein schmalbandiges Signal einer modulierten Frequenzlinie (28) des Linienspektrums (S) gewonnen wird, wobei insgesamt das schmalbandige Signal eine Bandbreite (D) umfasst, die weniger als dem Doppelten einer Rasterfrequenz (frep) des Zeitrasters (16) entspricht,
   - zu vorbestimmmten Zeitpunkten eine Phase (F(n,t)) des schmalbandigen Signals ermittelt wird und
   - die jeweils ermittelte Phase (F(n,t)) einem aus mehreren vorbestimmten Nachrichtensymbolen (12, 12') zugeordnet wird.

2. Verfahren nach Anspruch 1, **dadurch gekennzeichnet, dass** durch den Empfänger (R) zum Ermitteln der Phase (F(n,t)) das schmalbandige Signal in ein Basisband (BB) demoduliert wird.

3. Verfahren nach Anspruch 1 oder 2, **dadurch gekennzeichnet, dass** das schmalbandige Signal einer modulierten Frequenzlinie (28) ausgewertet wird, deren Mittenfrequenz (34) ein ungeradzahliges Vielfaches der Rasterfrequenz (frep) beträgt.

4. Verfahren nach einem der vorhergehenden Ansprüche, **dadurch gekennzeichnet, dass** zur Übertragung eines einzelnen Nachrichtensymbols (12, 12') durch den UWB-Sender (36) mehrere Pulse (14, 14') erzeugt werden, welche dieselbe Zeitverschiebung (20) in dem Zeitraster (16) aufweisen.

5. Verfahren nach einem der vorhergehenden Ansprüche, **dadurch gekennzeichnet, dass** durch den UWB-Sender (36) ein einzelnes Nachrichtensymbol (12, 12') als eine vorbestimmte Folge (56) von Pulsen kodiert ausgesendet wird.

6. Verfahren nach einem der vorhergehenden Ansprüche, **dadurch gekennzeichnet, dass** durch den Empfänger (R) ein Referenzsignal mit einer Referenzphase (F(n+1,t)) für das Ermitteln der Phase des schmalbandigen Signals aus einem sinusförmigen Signal einer weiteren Frequenzlinie (32) des Linienspektrums (S) erzeugt wird.

7. Verfahren nach Anspruch 6, wobei die Frequenz der weiteren Frequenzlinie (32) ein geradzahliges Vielfaches einer Rasterfrequenz (frep) beträgt.

8. Verfahren nach einem der vorhergehenden Ansprüche, **dadurch gekennzeichnet, dass** durch den Empfänger (R) zunächst eine Mehrzahl von modulierten Frequenzlinien (28) des Linienspektrums (S) bezüglich einer Signalqualität, insbesondere eines Signal-zu-Rausch-Verhältnisses und/oder einer Signalleistung, überprüft wird und als die modulierte Frequenzlinie (28) aus der Mehrzahl der modulierten Frequenzlinien (28) eine ausgewählt wird, bei welcher die Signalqualität einen vorbestimmten Schwellenwert übersteigt.

9. Verfahren nach einem der vorhergehenden Ansprüche, **dadurch gekennzeichnet, dass** eine Phase eines schmalbandigen Signals zumindest einer weiteren modulierten Frequenzlinie (28) des Linienspektrums (S) in der genannten Weise ermittelt und hieraus jeweils ein weiteres Nachrichtensymbol (12, 12') rekonstruiert wird und aus allen rekonstruierten Nachrichtensymbolen (12, 12') eines als das gesendete Nachrichtensymbol (12, 12') festgelegt wird.

10. System zur Funkübertragung von Nachrichtensymbolen (12, 12'), bei welchem ein UWB-Sender (36) zum Erzeugen eines breitbandigen Sendesignals (s) aus den Nachrichtensymbolen (12, 12') mittels einer Pulsphasenmodulation bereitgestellt ist,
**dadurch gekennzeichnet, dass**
zum Empfangen des Sendesignals (s) und zum Rekonstruieren der Nachrichtensymbole (12, 12') aus dem empfangenen Sendesignal ein Empfänger (R) bereitgestellt ist, welcher dazu ausgebildet ist, aus einer modulierten Frequenzlinie (28) eines Linienspektrums (S) des breitbandigen Sendesignals (s) ein schmalbandiges Signal zu gewinnen, dessen Bandbreite (D) weniger als dem Doppelten einer Rasterfrequenz (frep) eines Zeitrasters (16) der Pulsphasenmodulation entspricht, und zu vorbestimmten Zeitpunkten jeweils eine Phase (F(n,t)) des schmalbandigen Signals zu ermitteln und einem Nachrichtensymbol (12, 12') zuzuordnen.

11. Empfänger (R) für ein System nach Anspruch 10, welcher zum Empfangen eines pulsphasenmodulierten Sendesignals, welches ein Linienspektrum (S) mit einer Vielzahl von durch die Pulsmodulation veränderten Frequenzlinien aufweist, und zum Rekonstruieren von Nachrichtensymbolen (12, 12') aus dem empfangenen Sendesignal ausgebildet ist,
**dadurch gekennzeichnet, dass**
der Empfänger dazu ausgebildet ist,

- aus dem empfangenen Sendesignal ein schmalbandiges Signal zu gewinnen, dass eine modulierte Frequenzlinie (30) des Linienspektrums (S) des Sendesignals (s) umfasst und dessen Bandbreite (D) weniger als dem Doppelten einer Rasterfrequenz (frep) eines Zeitrasters (16) der Pulsphasenmodulation entspricht,
- zu vorbestimmten Zeitpunkten jeweils eine Phase des schmalbandigen Signals zu ermitteln,
- aus einem sinusförmigen Signal einer anderen Frequenzlinie (32) des Linienspektrums (S) eine Referenzphase (F(n+1,t)) zu bilden,
- die ermittelte Phase (F(n,t)) mit der Referenzphase (F(n+1,t)) zu vergleichen und hierdurch einen Phasendifferenzwert für eine Phasenverschiebung des schmalbandigen Signals bezüglich des sinusförmigen Signals zu ermitteln und
- den Phasendifferenzwert einem von mehreren vorbestimmten Nachrichtensymbolen (12, 12') zuzuordnen.

**Claims**

1. Method for radio transmission of message symbols (12, 12'), which radio transmission involves a UWB transmitter (36) emitting a pulse-phase-modulated transmission signal (S) that comprises isolated pulses (14, 14'), each of which has a time offset (20), in relation to a time pattern (16), that is dependent on a message symbol (12, 12') that the pulse (14, 14') represents, and all in all the transmission signal (s) has a line spectrum (S) having a multiplicity of frequency lines (30, 32) wherein the method involves the transmission signal (S) being received by a receiver (R),
**characterized in that**
the receiver (R):

- obtains a narrowband signal from a modulated frequency line (28) of the line spectrum (S), wherein all in all the narrowband signal comprises a bandwidth (D) that corresponds to less than twice a pattern frequency (frep) of the time pattern (16),
- a phase (F(n,t)) of the narrowband signal is ascertained at predetermined instants, and
- the respectively ascertained phase (F(n,t)) is associated with one of a plurality of predetermined message symbols (12, 12').

2. Method according to Claim 1, **characterized in that** in order to ascertain the phase (F(n,t)) the receiver (R) demodulates the narrowband signal to a baseband (BB).

3. Method according to Claim 1 or 2, **characterized in that** the narrowband signal from a modulated frequency line (28) whose center frequency (34) is an uneven multiple of the pattern frequency (frep) is evaluated.

4. Method according to one of the preceding claims, **characterized in that** in order to transmit a single message symbol (12, 12') the UWB transmitter (36) produces a plurality of pulses (14, 14') that have the same time shift (20) in the time pattern (16).

**5.** Method according to one of the preceding claims, **characterized in that** the UWB transmitter (36) emits a single message symbol (12, 12') in a form coded as a predetermined train (56) of pulses.

**6.** Method according to one of the preceding claims, **characterized in that** the receiver (R) produces a reference signal having a reference phase (F(n+1,t)) for ascertaining the phase of the narrowband signal from a sinusoidal signal from a further frequency line (32) of the line spectrum (S).

**7.** Method according to Claim 6, wherein the frequency of the further frequency line (32) is an even multiple of a frame frequency (frep).

**8.** Method according to one of the preceding claims, **characterized in that** the receiver (R) first of all checks a plurality of modulated frequency lines (28) of the line spectrum (S) for a signal quality, particularly a signal-to-noise ratio and/or a signal power, and selects, from the plurality of modulated frequency lines (28), one for which the signal quality exceeds a predetermined threshold value as the modulated frequency line (28).

**9.** Method according to one of the preceding claims, **characterized in that** a phase of a narrowband signal from at least one further modulated frequency line (28) of the line spectrum (S) is ascertained in the cited manner and a respective further message symbol (12, 12') is reconstructed therefrom and, from all reconstructed message symbols (12, 12'), one is stipulated as the sent message symbol (12, 12').

**10.** System for radio transmission of message symbols (12, 12') that has a UWB transmitter (36) provided for producing a wide band transmission signal (s) from the message
symbols (12, 12') by means of pulse phase modulation, **characterized in that**
in order to receive the transmission signal (s) and in order to reconstruct the message symbols (12, 12') from the received transmission signal a receiver (R) is provided that is designed to obtain from a modulated frequency line (28) of a line spectrum (S) of the wide band transmission signal (s) a narrow band signal whose band width (D) corresponds to less than twice the pattern frequency (frep) of a time pattern (16) of the pulse phase modulation and to ascertain a respective phase (F(n,t)) of the narrowband signal at predetermined instants and to associate said phase with a message symbol (12, 12').

**11.** Receiver (R) for a system according to Claim 10, which receiver is designed to receive a pulse-phase-modulated transmission signal, which has a line spectrum (S) having a multiplicity of frequency lines altered by the pulse modulation, and to reconstruct message symbols (12, 12') from the received transmission signal,
**characterized in that**
the receiver is designed

- to obtain from the received transmission signal a narrowband signal that comprises a modulated frequency line (30) of the line spectrum (S) of the transmission signal (s) and whose bandwidth (D) corresponds to less than twice a pattern frequency (frep) of a time pattern (16) of the pulse phase modulation,
- to ascertain a respective phase of the narrowband signal at predetermined instants,
- to form a reference phase (F(n+1,t)) from a sinusoidal signal from another frequency line (32) of the line spectrum (S),
- to compare the ascertained phase (F(n,t)) with the reference phase (F(n+1,t)) and thereby to ascertain a phase difference value for a phase shift in the narrowband signal in relation to the sinusoidal signal and
- to associate the phase difference value with one of a plurality of predetermined message symbols (12, 12').

**Revendications**

**1.** Procédé de transmission radio de symboles d'information (12, 12'), dans lequel on émet un signal d'émission (s) modulé en position d'impulsions par un émetteur ULB - ultra-large bande - (36), qui comprend des impulsions séparées (14, 14') dont chacune présente par rapport à une grille de temps (16) un décalage temporel, qui dépend d'un symbole d'information (12, 12') que l'impulsion (14, 14') représente, et le signal d'émission (s) présente globalement un spectre de lignes (S) avec une multiplicité de lignes de fréquence (30, 32), dans lequel le signal d'émission (s) est reçu par un récepteur (R) lors du procédé, **caractérisé en ce que**, par le récepteur (R):

- on obtient un signal à bande étroite d'une ligne de fréquence modulée (28) du spectre de lignes (S), dans lequel le signal à bande étroite présente globalement une largeur de bande (D), qui correspond à moins du double d'une fréquence de grille (frep) de la grille de temps (16),
- on détermine à des instants prédéterminés une phase (F(n,t)) du signal à bande étroite, et
- on associe la phase respectivement déterminée (F(n,t)) à un de plusieurs symboles d'information prédéterminés (12, 12').

2.  Procédé selon la revendication 1, **caractérisé en ce que** le signal à bande étroite est démodulé dans une bande de base (BB) par le récepteur (R) pour la détermination de la phase (F(n,t)).

3.  Procédé selon la revendication 1 ou 2, **caractérisé en ce que** l'on interprète le signal à bande étroite d'une ligne de fréquence modulée (28), dont la fréquence médiane (34) vaut un multiple impair de la fréquence de grille (frep).

4.  Procédé selon l'une quelconque des revendications précédentes, **caractérisé en ce que**, pour la transmission d'un seul symbole d'information (12, 12'), on produit par l'émetteur ULB (36) plusieurs impulsions (14, 14'), qui présentent le même décalage temporel (20) dans la grille de temps (16).

5.  Procédé selon l'une quelconque des revendications précédentes, **caractérisé en ce qu'**un seul symbole d'information (12, 12') est émis par l'émetteur ULB (36) de façon codée sous la forme d'une suite prédéterminée (56) d'impulsions.

6.  Procédé selon l'une quelconque des revendications précédentes, **caractérisé en ce que** l'on produit par le récepteur (R) un signal de référence avec une phase de référence (F(n+1,t)) pour la détermination de la phase du signal à bande étroite à partir d'un signal sinusoïdal d'une autre ligne de fréquence (32) du spectre de lignes (S).

7.  Procédé selon la revendication 6, **caractérisé en ce que** la fréquence de l'autre ligne de fréquence (32) vaut un multiple pair d'une fréquence de grille (frep).

8.  Procédé selon l'une quelconque des revendications précédentes, **caractérisé en ce que** l'on contrôle au moyen du récepteur (R) d'abord une multiplicité de lignes de fréquence modulées (28) du spectre de lignes (S) en ce qui concerne une qualité de signal, en particulier un rapport signal-bruit et/ou une puissance de signal, et on choisit, comme étant la ligne de fréquence modulée (28), parmi la multiplicité des lignes de fréquence modulées (28), une ligne pour laquelle la qualité du signal dépasse une valeur de seuil prédéterminée.

9.  Procédé selon l'une quelconque des revendications précédentes, **caractérisé en ce que** l'on détermine de la façon précitée une phase d'un signal à bande étroite d'au moins une autre ligne de fréquence modulée (28) du spectre de lignes (S) et on reconstruit à partir de celle-ci chaque fois un autre symbole d'information (12, 12') et on fixe à partir de tous les symboles d'information reconstruits (12, 12') un symbole comme étant le symbole d'information émis (12, 12').

10. Système de transmission radio de symboles d'information (12, 12'), dans lequel un émetteur ULB (36) est préparé pour la production d'un signal d'émission à bande large (s) à partir des symboles d'information (12, 12') au moyen d'une modulation en position d'impulsions, **caractérisé en ce qu'**un récepteur (R) est préparé pour la réception du signal d'émission (s) et pour la reconstruction des symboles d'information (12, 12') à partir du signal d'émission reçu, ce récepteur étant configuré pour obtenir, à partir d'une ligne de fréquence modulée (28) d'un spectre de lignes (S) du signal d'émission à bande large (s), un signal à bande étroite, dont la largeur de bande (D) correspond à moins du double d'une fréquence de grille (frep) d'une grille de temps (16) de la modulation en position d'impulsions, et pour déterminer à des instants prédéterminés respectivement une phase (F(n,t)) du signal à bande étroite et l'associer à un symbole d'information (12, 12').

11. Récepteur (R) pour un système selon la revendication 10, qui est configuré pour la réception d'un signal d'émission modulé en position d'impulsions, qui présente un spectre de lignes (S) avec une multiplicité de lignes de fréquence changées par la modulation des impulsions, et pour la reconstruction de symboles d'information (12, 12') à partir du signal d'émission reçu, **caractérisé en ce que** le récepteur est configuré pour

- obtenir, à partir du signal d'émission reçu, un signal à bande étroite qui comprend une ligne de fréquence modulée (30) du spectre de lignes (S) du signal d'émission (s) et dont la largeur de bande (D) correspond à moins du double d'une fréquence de grille (frep) d'une grille de temps (16) de la modulation en position d'impulsions,
- déterminer à des instants prédéterminés respectivement une phase du signal à bande étroite,

- former une phase de référence (F(n+1,t)) à partir d'un signal sinusoïdal d'une autre ligne de fréquence (32) du spectre de lignes (S),
- comparer la phase déterminée (F(n,t)) avec la phase de référence (F(n+1,t)) et déterminer ainsi une valeur de différence de phase pour un déphasage du signal à bande étroite par rapport au signal sinusoïdal, et
- associer la valeur de différence de phase à un de plusieurs symboles d'information prédéterminés (12, 12').

## FIG 1
(Stand der Technik)

## FIG 2

FIG 3

FIG 4

FIG 5

**IN DER BESCHREIBUNG AUFGEFÜHRTE DOKUMENTE**

**In der Beschreibung aufgeführte Patentdokumente**

- US 20050254553 A1
- US 20050175068 A1